# EUROPÄISCHE PATENTSCHRIFT

(11) **EP 0 848 857 B1**
(45) Veröffentlichungstag und Bekanntmachung des Hinweises auf die Patenterteilung: **03.04.2002**
(21) Anmeldenummer: 97920733.9
(22) Anmeldetag: 22.04.1997
(51) Int. Cl.: H01M 4/20, H01M 10/12

(54) **VERFAHREN ZUM HERSTELLEN VON BLEIAKKUMULATOREN**
METHOD OF PRODUCING LEAD STORAGE BATTERIES
PROCEDE DE PRODUCTION D'ACCUMULATEURS AU PLOMB

(30) Priorität: 09.07.1996 DE 19627616
(43) Veröffentlichungstag der Anmeldung: 24.06.1998
(73) Patentinhaber: Accumulatorenwerke Hoppecke Carl Zoellner & Sohn GmbH & Co. KG, 59929 Brilon (DE)
(72) Erfinder: NITSCHE, Werner, D-58559 Lippstadt (DE); LAHME, Norbert, D-59929 Brilon (DE); SASSMANNSHAUSEN, Günter, D-59929 Brilon (DE)
(74) Vertreter: Stenger, Watzke & Ring Patentanwälte
(86) Internationale Anmeldenummer: EP9702018
(87) Internationale Veröffentlichungsnummer: WO9801915

(56) Entgegenhaltungen:
- WO-A-90/06000
- GB-A- 2 082 092
- GB-A- 2 129 193
- US-A- 1 659 654
- US-A- 4 351 106
- US-A- 4 606 982
- PATENT ABSTRACTS OF JAPAN vol. 013, no. 531 (E-851), 28.November 1989 & JP 01 217867 A (JAPAN STORAGE BATTERY CO LTD), 31.August 1989,
- PATENT ABSTRACTS OF JAPAN vol. 013, no. 259 (E-773), 15.Juni 1989 & JP 01 054667 A (JAPAN STORAGE BATTERY CO LTD), 2.März 1989,

## Beschreibung

Die Erfindung betrifft ein Verfahren zum Herstellen von Bleiakkumulatoren.

Es ist bekannt, zur Herstellung von Bleiakkumulatoren zunächst im wesentlichen gitterförmige Bleielektroden herzustellen. Diese entstehenden Platten mit vorgegebenen Abmessungen werden mit einer sogenannten aktiven Masse versehen, die in die Maschen des Gitters eingestrichen wird. In bekannter Weise werden aus den Platten unter Zwischenlegung von Trennmaterial Stapel gebildet, wobei eine bestimmte Anzahl von Platten einen Zellenblock bilden. Diese Platten eines Zellenblockes werden elektrisch miteinander verbunden. Mehrere Zellenblöcke werden in entsprechende Gehäuse eingesetzt, ebenfalls entsprechend elektrisch verbunden und schließlich an einen positiven bzw. negativen Pol angeschlossen. Der Akkumulator muß dann mit Säure befüllt und geladen werden. Die Lagerung und der Transport können in unterschiedlichen Zuständen stattfinden, beispielsweise nach dem einleitenden Laden kann der Akkumulator wieder entleert werden und befindet sich somit in einem ungefüllten, geladenen Zustand. Auch kann im gefüllten und geladenen Zustand gelagert bzw. transportiert werden.

Bei der aktiven Masse handelt es sich um eine breiige, pastöse Masse, die unter Abgabe von Feuchtigkeit reifen muß. Dies geschieht durch langsame Wasserabgabe über mehrere Stunden. Durchschnittlich kann ein Reifungsprozeß bis zu 24 Std. in Anspruch nehmen.

Dieses Reifungserfordernis steht den Bemühungen zur Automatisierung des Herstellungsverfahrens von Bleiakkumulatoren möglichst im On-line-Betrieb entgegen.

Herkömmlicherweise ist es bekannt, die Bleielektroden mit der aktiven Masse zu versehen, zu stapeln und zum Reifen abzulagern. Die fertig gereiften Bleielektroden werden dann wieder in den Verarbeitungsprozeß eingeführt, mit Trennmaterialien versehen, gestapelt und zur Herstellung des Akkumulators in der obenbeschriebenen Weise weiterverarbeitet. Wird die Reifungsphase verkürzt, kann dies die späteren elektrischen Eigenschaften des Akkumulators erheblich beeinträchtigen. So kann ein zu hoher Feuchtegehalt der Platten zu dem Zeitpunkt, wo sie mit Trennmaterial versehen werden, zu späteren Schrumpfvorgängen des Trennmaterials infolge von Feuchtigkeitswechseln und zu verstärkten lonenwanderungen von den Platten in das Trennmaterial hinein führen, was die Tiefentladungseigenschaften eines Akkumulators erheblich negativ beeinflussen kann.

Die WO 90/06000 A offenbart ein kontinuierliches Verfahren zum Herstellen von Bleiakkumulatoren, bei dem die mit einer aktiven Masse und einem Trennmaterial versehenen Bleielektroden elektrisch zu Zellenblöcken verbunden und in einem Akkumulatorengehäuse plaziert werden, wo sie zur Ausreifung der Bleielektroden gelagert werden. Nach dem Ausreifungsprozeß wird der Akkumulator mit Säure befüllt und durch Aufladen mit elektrischem Strom betriebsbereit gemacht.

Ausgehend von diesem Stand der Technik liegt der vorliegenden Erfindung die **Aufgabe** zugrunde, ein Verfahren zur Herstellung von Bleiakkumulatoren anzugeben, welches ohne Zeitverluste einen On-line-Betrieb und eine weitestgehende Automatisierung bei der Herstellung von Bleiakkumulatoren mit guten elektrischen Eigenschaften ermöglicht. Weiterhin wird mit der Erfindung eine Vorrichtung zur Durchführung des Verfahrens angegeben und ein Akkumulator einer neuen Generation gekennzeichnet.

Zur technischen **Lösung** der Aufgabe wird ein Verfahren zur Herstellung von Bleiakkumulatoren mit den Merkmalen des Patentanspruch 1 angegeben.

Bei dem erfindungsgemäßen Verfahren wird der einen On-line-Prozeß zerstörende, zeitaufwendige Reifungs- bzw. Trocknungsprozeß an das Ende des mechanischen bzw. montageseitigen Herstellungsprozesses verlagert. Ein entsprechend gelagerter Akkumulator mit gereifter aktiver Masse wird im Anschluß an die Lagerung befüllt, geladen, überprüft, beschriftet und dgl.. Es handelt sich dabei um Aktivierungsvorgänge, die mit dem eigentlichen Herstellungsvorgang eines Akkumulators nichts mehr zu tun haben, sondern diesen betriebsbereit machen.

Obgleich allgemein von aktiver Masse gesprochen wird, bezieht sich die Erfindung grundsätzlich auf die Herstellung einer pastösen positiven oder negativen aktiven Masse. Nachdem die Gitterelektroden mit der positiven oder negativen aktiven Masse versehen werden, werden direkt anschließend jeweils eine von beiden Bleielektroden, positiv oder negativ, beidseitig mit Trennmaterial versehen, so daß die positiven und negativen mit Paste gefüllten Elektroden in bekannter Weise abwechselnd zu Plattenblöcken gestapelt werden. Die aktive Masse, beispielsweise ursprünglich Bleioxid, wird zunächst als pastöse Masse aufgebracht, ohne elektrochemisch aktiv zu sein. Erst während der elektrochemischen Vorgänge innerhalb eines Akkumulators entsteht aus der Paste die aktive Masse, beispielsweise Bleidioxid.

Durch die erfindungsgemäße Lösung kann das Herstellungsverfahren vollautomatisiert und im On-line-Betrieb ausgehend von der Herstellung gitterförmiger Bleielektroden bis zur Aufstapelung eines mit Zellenblöcken bestückten, elektrisch verbundenen und mit Polen versehenen Akkumulators durchgeführt werden.

Durch diese nunmehr mögliche Automatisierung wird die Produktionskapazität einer Anlage erheblich gesteigert. Darüber hinaus werden personalintensive Arbeiten entbehrlich, wie beispielsweise das Ablagern von mit aktiver Masse versehenen Bleielektroden, das Wiederzuführen von getrockneten Bleielektroden in den Weiterverarbeitungsprozeß und dgl..

Mit besonderem Vorteil wird mit der Erfindung vorgeschlagen, daß nach dem Herstellen der gitterförmigen Bleielektroden und dem Aufbringen der pastösen, aktiven Masse und dem Trennmaterial der Feuchtegehalt auf diesen Gesamtverbund eingestellt wird. Diese verfahrensseitige Maßnahme ist von besonderer Bedeutung. Die Trennmaterialien sind beispielsweise eine Polyäthylen-Folie (PE-Folie) mit Kieselsäureeinlagerungen. Die Bleielektroden werden gemäß einem vorteilhaften Vorschlag der Erfindung in einem kontinuierlichen Prozeß gegossen, so daß sich sogenannte Elektrodencoils ergeben, also Spulen von in Bandform vorliegenden Elektroden, die mittels einer Gießwalze hergestellt wurden. Auf diese Coils bzw. auf das gegossene Band kann direkt in einem ebenfalls kontinuierlichen Prozeß die pastöse, aktive Masse aufgebracht werden. Anschließend werden die mit aktiver Masse versehenen Bleielektroden vereinzelt und einzeln in aus dem Trennmaterial gebildete Taschen eingelegt. Es versteht sich von selbst, daß die Vereinzelung auch durch die Herstellung von Elektroden direkt erfolgen kann, oder durch Vereinzelung eines Coils. Zur Herstellung der Taschen wird die mit Kieselsäure versehene PE-Folie von einer Rolle zugeführt und die jeweilige Tasche unter direkter Einlegung der Elektrode gebildet. Dabei wird ein Folienstreifen abgelenkt, unter Einlegung der Elektrode umgefaltet und an zwei Seitenrändern mittels Preßkraft verschlossen.

Gemäß einem besonders vorteilhaften Vorschlag der Erfindung wird das Trennmaterial vor der Verarbeitung zu Taschen eine vorgegebene Zeitdauer bei erhöhten Temperaturen, beispielsweise um 100° C, gelagert. Diese Temperaturvorbehandlung des Trennmaterials wirkt einem Schrumpfen des Trennmaterials zu einem späteren Zeitpunkt aufgrund von Feuchtigkeitsaufnahme und anschließender Trocknung effektiv entgegen.

Wie bereits ausgeführt wurde, ist ein besonderes und wesentliches Merkmal der Erfindung darin zu sehen, daß der Feuchtegehalt auf die Gesamtgruppe bestehend aus Bleielektrode, darauf aufgebrachter aktiver Masse und Trennmaterial abgestimmt wird. Der ideale Reifefeuchtigkeitsgehalt der mit aktiver Masse versehenen Bleielektroden liegt bei 6 bis 8 %. Die aktive Masse ist pastös breiig und gibt während der Reifung Feuchte ab. Das an sich chemisch indifferente, poröse Trennmaterial wird die Feuchte aufnehmen und zusätzlich weitere Feuchtigkeit der Platte entziehen, so daß ein idealer Ablauf des Reifungsprozesses nicht garantiert werden kann. Aus diesem Grund muß der Gesamtfeuchtigkeitsgehalt auch die Feuchtigkeitsaufnahmefähigkeit des Trennmaterials berücksichtigen. Zur Lösung dieses Problems wird mit der Erfindung vorgeschlagen, daß die aus mit aktiver Masse versehene Bleielektrode und Trennmaterial bestehende Baugruppe mit Flüssigkeit getränkt wird. Durch diese Maßnahme kann das Trennmaterial Feuchtigkeit aufnehmen, so daß es zu einem späteren Zeitpunkt die aktive Masse nicht weiter austrocknet. In vorteilhafter Weise geschieht das Tränken durch Eintauchen in eine Flüssigkeit. Grundsätzlich kann hierzu Wasser verwendet werden, da es nur um den erforderlichen Feuchtigkeitsgehalt geht. Gemäß einer vorteilhaften Ausgestaltung der Erfindung wird jedoch vorgeschlagen, die eingetaschte und mit aktiver Masse versehene Bleielektrode in Säure, vorzugsweise in Schwefelsäure zu tränken. Durch diese Maßnahmen werden weitere besonders vorteilhafte Ergebnisse erzielt. Einerseits wirkt die Säurebehandlung einem späteren Schrumpfen des Trennmaterials beim späteren Austrocknen entgegen. Insofern könnte die obengenannte Temperaturbehandlung entbehrlich werden oder durch das Tränken in Säure unterstützt werden.

Darüber hinaus bewirkt das Eintränken in Schwefelsäure, daß eine ansonsten zwangsläufig stattfindende lonenwanderung von der Bleielektrode in das Trennmaterial hinein unterbunden wird. Dadurch wird das spätere Tiefentladeverhalten des neugebildeten Akkumulators erheblich verbessert.

In vorteilhafterweise werden die mit dem erforderlichen Feuchtegehalt versehenen Baugruppen, bestehend aus Bleielektrode, aktiver Masse und Trennmaterial, gestapelt, elektrisch verbunden, in ein Gehäuse eingesetzt, elektrisch angeschlossen und schließlich der fertiggestellte Akkumulator zum Reifen der aktiven Masse gelagert.

Das Stapeln kann vollautomatisch geschehen und kann zeitlich auch auf einen Zeitpunkt vor dem Tränken verlagert sein, also direkt an das Bilden der Taschen aus Trennmaterial angeschlossen werden.

Mit der Erfindung wird ein Verfahren zur Herstellung von Bleiakkumulatoren angegeben, welche einen Höchstgrad an Automatisierung und Herstellung im On-line-Betrieb ermöglicht. Durch die Verlagerung des den On-line-Betrieb unterbrechenden Reifungsprozesses an das Ende des Herstellungs- und Montagevorgangs werden die Produktionskapazitäten erheblich steigerbar. Durch die besondere Maßnahme, den Feuchtegehalt auf die Gesamtbaugruppe aus Bleielektrode, aktiver Masse und Trennmaterial abzustimmen, wird ein optimales Reifen der aktiven Masse auch im mit Trennmaterial versehenen, gestapelten und in ein Akkumulatorgehäuse eingebauten Zustand gewährleistet.

Mit der Erfindung wird weiterhin eine Vorrichtung zur Herstellung von Bleiakkumulatoren nach dem erfindungsgemäßen Verfahren mit den Merkmalen des Anspruches 12 angegeben.

Die Gußeinheit und die Beschichtungseinheit sind in vorteilhafter Weise kontinuierlich arbeitende Anlagen, so daß die Elektroden miteinander zusammenhängend in Bandform gegossen und in dieser Bandform entweder mit oder ohne zwischenzeitlicher Coilbildung auch mit aktiver Masse beschichtet werden können. Eine Separiereinheit separiert die Elektrode und in der Einheit zum Aufbringen der Trennmaterialien wird PE-Folie zugeführt, gefaltet und die Bleielektrode eingelegt. Mit einer Randpreßvorrichtung werden wenigstens zwei offene Seitenkanten der PE-Folienhülle verschlossen.

Schließlich weist die Vorrichtung eine Einheit zur Einstellung des Feuchtegehaltes in Form eines Tränkbeckens auf, durch welches die eingetaschten Bleielektroden vereinzelt oder bereits im Stapel hindurchgeführt werden. Dabei kommt es im wesentlichen darauf an, daß das Trennmaterial getränkt wird. Dieser Vorgang kann möglicherweise auch vor dem Herstellen der Taschen erfolgen.

Die erfindungsgemäße Vorrichtung des erfindungsgemäßen Verfahrens umfaßt aneinander anschließende Einheiten zur Durchführung eines automatisierten On-line-Herstellungsvorgangs, wobei als wesentliche Einheit eine Tränkeinheit oder eine sonstige Einheit zur Einstellung des erforderlichen Feuchtegehaltes eingebunden ist.

Bei einem nach dem erfindungsgemäßen Verfahren hergestellten Bleiakkumulator handelt es sich um einen Bleiakkumulator neuer Generation, welcher mit einer in Taschen und in gestapeltem Zustand gereifte aktive Masse versehen ist. Ein derartiger Akkumulator weist hervorragende technologische Eigenschaften auf und ist dennoch in einem kontinuierlichen On-line-Prozeß wirtschaftlich und kostengünstig herstellbar.

Der Kern der Erfindung liegt verfahrenstechnisch in der Verlagerung des zeitraubenden Reifungsprozesses an das Ende des mechanischen Herstell- und Montagevorganges. Weiterhin liegt eine Besonderheit der Erfindung in der Einstellung eines Gesamtfeuchtegehaltes bei der Baugruppe bestehend aus Bleielektroden, aktiver Masse und Trennmaterial. Dabei kommt es weniger darauf an, mit welchen Mitteln und zu welchem Zeitpunkt die einzelnen Einheiten mit entsprechender Feuchtigkeit versehen werden. Beispielsweise könnte der gesamte Herstellungsprozeß in einer ausreichend feuchten Umgebung stattfinden, so daß sich beispielsweise das Trennmaterial aus der Umgebung mit Feuchte versieht. Auch kann das Trennmaterial vorbehandelt werden, wobei die Wärmebehandlung zur Schrumpfvermeidung eine weitere Besonderheit ist. Aber das Trennmaterial kann auch vorgewässert oder in Säure vorgetränkt werden, bevor es zu einer die Bleielektrode aufnehmenden Tasche verarbeitet wird.

Weitere Vorteile und Merkmale der Erfindung ergeben sich aus der folgenden Beschreibung anhand der Figuren. Dabei zeigt:

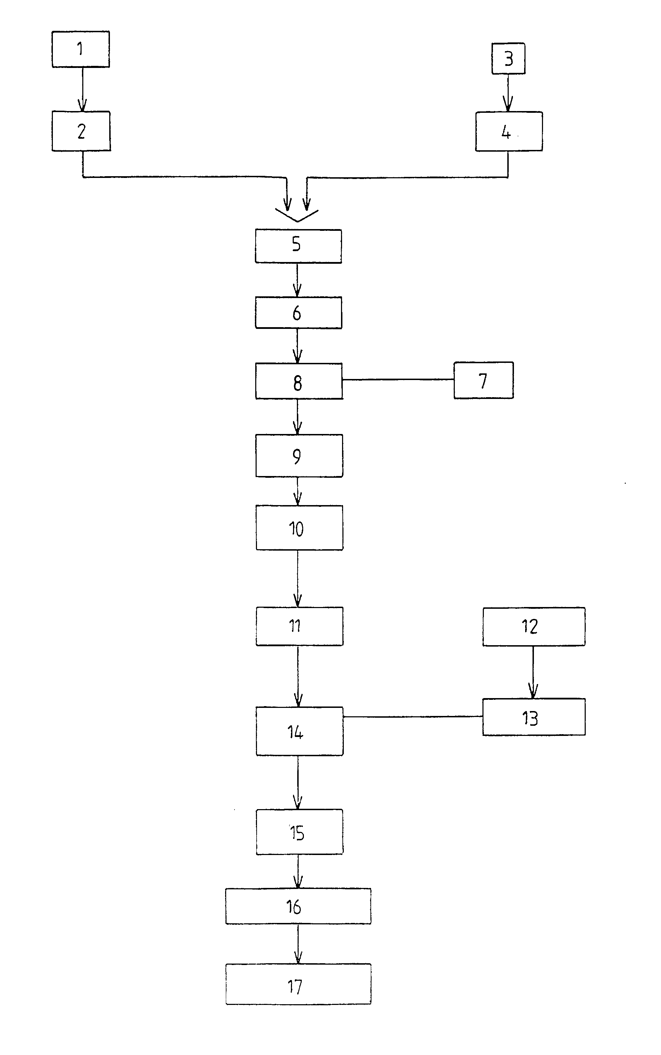

- Fig. 1: ein Flußdiagramm zur Verdeutlichung der Abfolge der einzelnen Herstellungsvorgänge.

Insgesamt umfaßt das Herstellungsverfahren die Vorbereitung einiger Rohstoffe bzw. einiger Fertigteile. Zu den Rohstoffen gehören zunächst Blei, welches einerseits im Gußverfahren zu gitterförmigen Elektroden verarbeitet wird, welches aber auch andererseits zur Herstellung der aktiven Masse, beispielsweise zur Herstellung von Bleioxid, verwendet wird. Im elektrochemischen Prozeß wird dann aus dem Bleioxid Bleidioxid. Weiterhin muß ein Trennmaterial an geeigneter Stelle zugeführt werden und schließlich ein Gehäuse.

Bei dem in Fig. 1 gezeigten Ausführungsbeispiel wird in einer Bleischmelze 1 Blei geschmolzen und in einem Gittergußverfahren 2 zu Gitterelektroden verarbeitet. Dabei kann es sich um ein kontinuierliches Bleigießverfahren handeln, aus dem in Bandform miteinander zusammenhängende Bleielektroden hervorgehen. Diese können auf Coils gewickelt oder direkt der Weiterverarbeitung zugeführt werden.

Im Rahmen einer Bleivorbereitung 3 wird Blei zur Herstellung der aktiven Masse vorbereitet und in der Massezubereitung 4 die aktive Masse ausgebildet. Obwohl im gezeigten Ausführungsbeispiel nur von einer Bleivorbereitung und einer aktiven Masse die Rede ist, ist es selbstverständlich, daß parallel sowohl positive als auch negative pastöse Massen hergestellt werden, aus denen später die jeweiligen aktiven Massen entstehen. Die im Gitterguß 2 hergestellten gitterförmigen Elektroden, die kontinuierlich oder vereinzelt zugeführt werden, und die aktive Masse werden in der Beschichtung 5 zusammengeführt. Im gezeigten Ausführungsbeispiel wird davon ausgegangen, daß die Elektrodengitter in Bandform zugeführt und erst nach der Beschichtung 5 in der Separierung 6 vereinzelt werden.

Eine Folienzuführung 7 sorgt für die Zuführung des Trennmaterials, beispielsweise PE-Folie mit Kieselsäureeinlagerungen. Das Trennmaterial kann durch Temperaturbehandlung vorbehandelt sein. In der Eintaschung 8 werden die vereinzelten und mit aktiver Masse versehenen Bleielektroden in durch die Folie gebildete Taschen eingelegt. Die Taschen werden anschließend in der Tränkung 9 mit Feuchtigkeit versehen und bei Schritt 10 gestapelt. Der Stapelvorgang kann auch vor der Tränkung erfolgen.

Der einen Zellenblock bildende Stapel, der selbstverständlich nach den an sich bekannten Herstellungsvorschriften zur Bildung eines Zellenblockes zusammengelegt ist, wird in einem Verfahrensschritt 11 elektrisch zu einer Einheit verbunden. Über eine Gehäusezuführung 12 werden Gehäuse einer Gehäusevorbereitung 13 zugeführt. Hier werden kleinere Vorbereitungsmaßnahmen durchgeführt, beispielsweise das Stanzen von Verbindungslöchern, Entgraten, soweit erforderlich usw.. Das mit der ausreichenden Anzahl von Zellenblöcken bestückte Gehäuse wird einem weiteren Verfahrensschritt zugeführt, in welchem die einzelnen Zellenblöcke elektrisch angeschlossen und der Akkumulator mit einem positiven und einem negativen Pol versehen werden.

In einem folgenden, wichtigen Verfahrensschritt erfolgt die Reifung der Platten durch Lagerung. Die Lagerung kann unter vorgegebenen Umweltbedingungen erfolgen, beispielsweise bei bestimmten Temperaturen, Feuchtigkeitsgehalten und dgl..

Nach erfolgter Reifung wird der Akkumulator der Fertigstellung zugeführt. Hierzu gehören beispielsweise das Befüllen, das Laden, das Beschriften, die Transportvorbereitung und dgl..

Es versteht sich von selbst, daß kleinere abschließende Bearbeitungsvorgänge auch in den Zeitraum hinter die Reifung verlegt werden können. Beispielsweise kann es sinnvoll sein, die Zellenblöcke erst nach der Reifung in einem einfachen Vorgang elektrisch anzuschließen und mit Polen zu versehen.

Darüber hinaus versteht es sich von selbst, daß die Blöcke unter Berücksichtigung der an sich bekannten elektrophysikalischen Grundlagen zusammengestellt, gestapelt und dgl. bearbeitet werden, und daß entsprechende Meßverfahren und Verfahrenssteuerungen angewandt werden.

Variationen des Verfahrens in der Reihenfolge liegen im Rahmen der Erfindung. Wesentlich ist, daß der zeitraubende und jede On-line-Bearbeitung unterbrechende Reifungsprozeß weitestgehend an das Ende der Akkumulatorenherstellung verlagert ist und durch die besondere Berücksichtigung eines erforderlichen Feuchtigkeitsgehaltes unterstützt wird.

### Bezugszeichenliste:

- 1: Bleischmelze
- 2: Gitterguß
- 3: Bleivorbereitung
- 4: Massezubereitung
- 5: Beschichtung
- 6: Separierung
- 7: Folienzuführung
- 8: Eintaschung
- 9: Tränkung
- 10: Stapelung
- 11: Verbindung
- 12: Gehäusezuführung
- 13: Gehäusevorbereitung
- 14: Einsetzung
- 15: Anschließung
- 16: Reifung der Platten
- 17: Fertigstellung

## Patentansprüche

1. Verfahren zur Herstellung von Bleiakkumulatoren, wobei im wesentlichen nacheinander folgende Schritte durchlaufen werden:
a) Herstellung von Bleielektroden,
b) Versehen der Bleielektroden mit einer pastösen, aktiven Masse,
c) beidseitiges Versehen der mit aktiver Masse versehenen Bleielektroden mit Trennmaterial,
d) Stapeln, elektrisch verbinden, einen Zellblock bildend in ein Gehäuse einsetzen und lagern zum Reifen der pastösen, aktiven Masse,
**dadurch gekennzeichnet,**
**daß** die Gesamtbaugruppe, bestehend aus Bleielektrode, aktiver Masse und Trennmaterial, im Anschluß an Schritt c) getränkt wird, um den Feuchtigkeitsgehalt der Gesamtbaugruppe auf den für die Reifung notwendigen Feuchtigkeitsgehalt einzustellen.

2. Verfahren nach Anspruch 1, **dadurch gekennzeichnet, daß** zum Anfeuchten Säure, insbesondere Schwefelsäure verwendet wird.

3. Verfahren nach einem der vorhergehenden Ansprüche, **dadurch gekennzeichnet, daß** die Bleielektroden in einem kontinuierlichen Gußverfahren hergestellt werden.

4. Verfahren nach einem der vorhergehenden Ansprüche, **dadurch gekennzeichnet, daß** die aktive Masse in einem kontinuierlichen Beschichtungsverfahren auf die gitterförmigen Bleielektroden aufgebracht wird.

5. Verfahren nach einem der vorhergehenden Ansprüche, **dadurch gekennzeichnet, daß** die vereinzelten und beschichteten Elektroden in Trennmaterialtaschen eingesetzt werden.

6. Verfahren nach Anspruch 5, **dadurch gekennzeichnet, daß** die Trennmaterialtaschen durch von einer Rolle zugeführter PE-Folie gebildet werden.

7. Verfahren nach einem der Ansprüche 5 oder 6, **dadurch gekennzeichnet, daß** das Trennmaterial unter Temperatureinwirkung vorbehandelt wird.

8. Verfahren nach einem der vorhergehenden Ansprüche, **dadurch gekennzeichnet, daß** das Stapeln und das elektrische Verbinden der mit Trennmaterial versehenen Bleielektroden automatisch erfolgen.

9. Verfahren nach einem der vorhergehenden Ansprüche, **dadurch gekennzeichnet, daß** das Einsetzen von Zellenblöcken in das Gehäuse automatisch erfolgt.

10. Verfahren nach einem der vorhergehenden Ansprüche, **dadurch gekennzeichnet, daß** das elektrische Anschließen von im Gehäuse eingesetzten Zellenblöcken automatisch erfolgt.

11. Verfahren nach einem der vorhergehenden Ansprüche, **dadurch gekennzeichnet, daß** der fertigmontierte Akkumulator zur Reifung der aktiven Masse gelagert wird.

12. Vorrichtung zur Herstellung von Bleiakkumulatoren nach dem Verfahren nach einem der Ansprüche 1 bis 11, mit einer
a) Bleigußeinheit zur Bildung der Bleielektroden,
b) daran anschließend eine Beschichtungseinheit zum Aufbringen der aktiven Masse,
c) daran anschließend eine Einheit zum Aufbringen des Trennmaterials,
wobei sich direkt an diese Einheit eine Einheit zum Tränken, vorzugsweise in Form eines Tränkebeckens, anschließt, zum Durchführen und Befeuchten der Baugruppe bestehend aus Bleielektrode, aktiver Masse und Trennmaterial, sowie weitere Einheiten zum Vorbereiten und Einsetzen der Baugruppen in ein Gehäuse.

13. Vorrichtung nach Anspruch 12, **dadurch gekennzeichnet, daß** die Bleigußeinheit eine kontinuierlich arbeitende Einheit ist.

14. Vorrichtung nach einem der Ansprüche 12 oder 13, **dadurch gekennzeichnet, daß** die Beschichtungseinheit eine kontinuierlich arbeitende Beschichtungseinheit ist.

15. Vorrichtung nach einem der Ansprüche 12 bis 14, **dadurch gekennzeichnet, daß** an die Beschichtungseinheit eine Separiereinheit angeschlossen ist.

16. Vorrichtung nach einem der Ansprüche 12 bis 15, **dadurch gekennzeichnet, daß** die Einheit zum aufbringen des Trennmaterials eine Zuführung für eine bandförmige Folie, eine Falteinheit und eine Einlegevorrichtung umfaßt.

17. Vorrichtung nach Anspruch 16, **dadurch gekennzeichnet, daß** die Einheit zusätzlich eine Randpreßbaugruppe umfaßt.

18. Vorrichtung nach einem der Ansprüche 12 bis 17, **dadurch gekennzeichnet, daß** diese Sortier- und Stapeleinheiten aufweist.

## Claims

1. Method for producing lead storage batteries, in which substantially the following steps are passed through in succession:
a) production of lead electrodes,
b) providing the lead electrodes with a pasty active compound,
c) providing both sides of the lead electrodes which have been provided with active compound with separating material,
d) stacking, electrically connecting, insertion into a casing in order to form a cell block and storage for conditioning of the pasty active compound,
**characterized in that** the entire assembly comprising lead electrode, active compound and separating material is impregnated following step c), in order to set the moisture content of the overall assembly to the moisture content required for the conditioning.

2. Method according to Claim 1, **characterized in that** acid, in particular sulphuric acid, is used for the wetting step.

3. Method according to one of the preceding claims, **characterized in that** the lead electrodes are produced in a continuously operating casting process.

4. Method according to one of the preceding claims, **characterized in that** the active compound is applied to the lead electrodes which are in grid form using a continuous coating process.

5. Method according to one of the preceding claims, **characterized in that** the electrodes which have been divided into individual electrodes and coated are inserted into pockets of separating material.

6. Method according to Claim 5, **characterized in that** the pockets of separating material are formed by PE film which is fed from a reel.

7. Method according to one of Claims 5 or 6, **characterized in that** the separating material is thermally pretreated.

8. Method according to one of the preceding claims, **characterized in that** the stacking and electrical connection of the lead electrodes provided with separating material take place automatically.

9. Method according to one of the preceding claims, **characterized in that** the insertion of cell blocks into the casing takes place automatically.

10. Method according to one of the preceding claims, **characterized in that** the electrical connection of cell blocks which have been inserted in the casing takes place automatically.

11. Method according to one of the preceding claims, **characterized in that** the fully assembled storage battery is stored in order to condition the active compound.

12. Device for producing lead storage batteries using the method according to one of Claims 1 to 11, having a
a) lead-casting unit for forming the lead electrodes,
b) followed by a coating unit for applying the active compound,
c) followed by a unit for applying the separating material,
this unit being immediately followed by a unit for impregnation, preferably in the form of an impregnation tank, for the assembly comprising lead electrode, active compound and separating material to pass through and be wetted, as well as further units for preparing and inserting the assemblies into a casing.

13. Device according to Claim 12, **characterized in that** the lead-casting unit is a continuously operating unit.

14. Device according to one of Claims 12 or 13, **characterized in that** the coating unit is a continuously operating coating unit.

15. Device according to one of Claims 12 to 14, **characterized in that** a separating unit is connected to the coating unit.

16. Device according to one of Claims 12 to 15, **characterized in that** the unit for applying the separating material comprises a feed for a film in strip form, a folding unit and a laying device.

17. Device according to Claim 16, **characterized in that** the unit additionally comprises an edge-pressing assembly.

18. Device according to one of Claims 12 to 17, **characterized in that** it has sorting and stacking units.

## Revendications

1. Procédé pour la fabrication d'accumulateurs au plomb, dans lequel on exécute successivement les étapes suivantes :
a) on réalise des électrodes en plomb,
b) on munit les électrodes en plomb avec une masse active pâteuse,
c) on munit les électrodes en plomb pourvues de la masse active avec une matière de séparation sur les deux côtés,
d) on empile, on branche par voie électrique, on forme un bloc d'éléments, on met en place dans un boîtier et on entrepose pour la maturation de la masse active pâteuse,
**caractérisé en ce que**
suite à l'étape c), on imbibe l'ensemble du groupe structurel constitué par l'électrode en plomb, par la masse active et par la matière de séparation, afin de régler la teneur en humidité de l'ensemble du groupe structurel pour l'adapter à la teneur en humidité nécessaire pour la maturation.

2. Procédé selon la revendication 1, **caractérisé en ce que** pour l'humidification, on utilise de l'acide, en particulier de l'acide sulfurique.

3. Procédé selon l'une ou l'autre des revendications précédentes, **caractérisé en ce que** l'on réalise les électrodes en plomb dans un procédé de coulée en continu.

4. Procédé selon l'une quelconque des revendications précédentes, **caractérisé en ce que** l'on dépose la masse active dans un procédé de revêtement en continu sur les électrodes en plomb en forme de grille.

5. Procédé selon l'une quelconque des revendications précédentes, **caractérisé en ce que** l'on met en place les électrodes individuelles et revêtues dans des poches de matière de séparation.

6. Procédé selon la revendication 5, **caractérisé en ce que** l'on forme les poches de matière de séparation par un film en PE amené depuis un rouleau.

7. Procédé selon l'une ou l'autre des revendications 5 et 6, **caractérisé en ce que** l'on traite préalablement la matière de séparation par action de chaleur.

8. Procédé selon l'une quelconque des revendications précédentes, **caractérisé en ce que** l'empilement et le branchement électrique des électrodes de plomb pourvues de la matière de séparation s'effectuent par voie automatique.

9. Procédé selon l'une quelconque des revendications précédentes, **caractérisé en ce que** la mise en place des blocs d'éléments dans le boîtier s'effectue par voie automatique.

10. Procédé selon l'une quelconque des revendications précédentes, **caractérisé en ce que** le branchement électrique des blocs d'éléments mis en place dans le boîtier s'effectue par voie automatique.

11. Procédé selon l'une quelconque des revendications précédentes, **caractérisé en ce que** l'on entrepose l'accumulateur monté fini pour la maturation de la masse active.

12. Appareil pour la fabrication d'accumulateurs au plomb par le procédé selon l'une quelconque des revendications 1 à 11, comportant :
a) une unité de coulée de plomb pour former les électrodes de plomb,
b) à la suite de celle-ci une unité de revêtement pour déposer la masse active,
c) à la suite de celle-ci une unité pour déposer la matière de séparation,
et directement à la suite de cette unité est prévue une unité à imbiber, de préférence sous forme d'un bac d'imbibition, pour faire passer et humidifier le groupe structurel constitué par l'électrode en plomb, par la masse active et par la matière de séparation, ainsi que d'autres unités pour préparer et mettre en place les groupes structurels dans un boîtier.

13. Appareil selon la revendication 12, **caractérisé en ce que** l'unité de coulée de plomb est une unité fonctionnant en continu.

14. Appareil selon l'une ou l'autre des revendications 12 et 13, **caractérisé en ce que** l'unité de revêtement est une unité de revêtement fonctionnant en continu.

15. Appareil selon l'une quelconque des revendications 12 à 14, **caractérisé en ce qu'**une unité de séparation est branchée à l'unité de revêtement.

16. Appareil selon l'une quelconque des revendications 12 à 15, **caractérisé en ce que** l'unité pour déposer la matière de séparation comprend une amenée pour un film en forme de bande, une unité de pliage et un dispositif d'interposition.

17. Appareil selon la revendication 16, **caractérisé en ce que** l'unité comprend en supplément un groupe structurel de pressage marginal.

18. Appareil selon l'une quelconque des revendications 12 à 17, **caractérisé en ce que** celui-ci comprend des unités de triage et d'empilement.
